# FASCICULE DE BREVET EUROPEEN

(11) **EP 3 099 534 B1**
(45) Date de publication et mention de la délivrance du brevet: **14.03.2018**
(21) Numéro de dépôt: 15702529.7
(22) Date de dépôt: 06.01.2015
(51) Int. Cl.: B60R 21/214, B60J 3/02

(54) **PLAQUE DE SOUTIEN ET DISPOSITIF DE FIXATION D'UN MODULE DE COUSSIN GONFLABLE**
TRÄGERPLATTE UND VORRICHTUNG ZUR BEFESTIGUNG EINES AIRBAGMODULS
SUPPORTING PLATE AND DEVICE FOR ATTACHING AN AIRBAG MODULE

(30) Priorité: 30.01.2014 FR 1450761
(43) Date de publication de la demande: 07.12.2016
(73) Titulaire: PSA Automobiles SA, 78300 Poissy (FR)
(72) Inventeur: VILLA, Laurent, F-91460 Marcoussis (FR); PARODY, Bruno, 78210 Saint-Cyr L'Ecole (FR)
(86) Numéro de dépôt international: PCT/FR2015/050022
(87) Numéro de publication internationale: WO 2015/114231

(56) Documents cités:
- WO-A2-03/104033
- US-A1- 2003 052 476
- US-A1- 2005 040 627

## Description

L'invention a trait au domaine des véhicules automobiles, plus particulièrement à la fixation d'un module de coussin gonflable au toit du véhicule. Plus particulièrement encore l'invention a trait à la fixation d'un tel accessoire en haut d'un pare-brise à proximité d'un pare-soleil.

La réalisation d'un véhicule automobile avec un coussin gonflable logé sur le toit est connue. Un tel accessoire est généralement réalisé pour la protection du conducteur et/ou du passager, il est précisément destiné à protéger au mieux une personne lors d'une collision du véhicule. Dans le cas d'une collision frontale, qui est celle généralement prioritaire pour laquelle le véhicule est ainsi réalisé, le torse et la tête de la personne sont les parties du corps qu'un coussin déployé est apte à protéger. Pour ce faire une cartouche de gaz comprimé est libérée de manière à gonfler le coussin de manière quasi instantanée et le déployer en avant de la personne. La forme du déploiement final d'un tel coussin est obtenue principalement par la géométrie qui lui est donnée, et il peut être optimisé selon l'habitacle et les équipements intérieurs. La dynamique d'ouverture du coussin gonflable et les effets qui y sont liés sont des critères importants de sa réalisation, il est recherché par exemple qu'une telle ouverture jusqu'au déploiement ne génère pas de risques supplémentaires de blessure pour le passager. Or il est aussi connu de loger le dispositif de manière à ce qu'il ne soit pas visible, par exemple derrière la garniture de toit, celle-ci étant généralement à proximité de la tête du conducteur ou du passager. La garniture est un élément décoratif du toit. Un pare-soleil en tant qu'élément fonctionnel du toit est monté sous la garniture à proximité encore plus immédiate de la personne à protéger et pouvant être en dessous du coussin gonflable. D'autres éléments fonctionnels peuvent aussi être réalisés sur le toit, par exemple un rétroviseur ou des éclairages. Il est donc recherché de réaliser le dispositif de coussin gonflable de toit tout en s'accommodant de tels éléments fonctionnels ou décoratifs de manière à éviter de générer des risques supplémentaires de blessure pour le passager.

Le document de brevet publié US 2005/0040627A1 divulgue un véhicule comprenant un module de coussin gonflable logé sur le toit en haut du pare-brise et au-dessus d'une garniture de toit, un pare-soleil se trouvant en dessous de la garniture. Le dispositif de coussin gonflable comprend un boîtier vraisemblablement métallique et de section généralement en forme de U couché avec l'ouverture vers l'avant. Le boîtier est fixé au toit par vissage et la garniture ainsi que le pare-soleil sont montés sur le bord avant de la paroi inférieure du boîtier. Cet enseignement est intéressant en ce qu'il permet un montage aisé du module de coussin gonflable. Il présente toutefois l'inconvénient que la paroi inférieure à laquelle le pare-soleil est fixé est susceptible de plier vers le bas lors du déploiement du coussin et, partant, de déplacer le pare-soleil. Le déplacement du pare-soleil est susceptible de blesser le passager du véhicule assis à l'avant du véhicule.

Le document US 2003/0052476 A1 décrit un dispositif de fixation selon le préambule de la revendication 1. L'invention a pour objectif de proposer une solution de fixation d'un module de coussin gonflable situé entre le toit et la garniture d'un véhicule automobile au-dessus du pare-soleil palliant au moins un des inconvénients susmentionnés. Plus particulièrement, l'invention a pour objectif de proposer une solution de fixation d'un module de coussin gonflable qui soit rapide et sûre pour le passager concerné.

L'invention a pour objet un dispositif de fixation présentant les caractéristiques de la revendication 1. Avantageusement, la plaque de soutien est en aluminium ou en fer. Avantageusement, le ou les raidisseurs peuvent s'étendre sur plus de 80% de la longueur de la plaque.

Selon un mode avantageux de l'invention, le raidisseur ou au moins un des raidisseurs à section de profil arrondi s'étend essentiellement en position centrale de la plaque de soutien.

Avantageusement, un raidisseur à section de profil arrondi présente un creux de 20% à 40% de la hauteur du module de coussin gonflable.

Selon un mode avantageux de l'invention, le support comprend deux portions longitudinales et une portion transversale arrière, formant un logement pour le module de coussin gonflable, la plaque de soutien étant apte à couvrir ledit logement.

Selon un mode avantageux de l'invention, la plaque de soutien comprend une portion arrière coudée par rapport à la portion principale de ladite plaque, ladite portion arrière étant configurée pour coopérer, préférentiellement par engagement, avec la portion transversale arrière du support.

Avantageusement, le ou les raidisseurs peuvent s'étendre au moins partiellement sur la portion arrière coudée.

Selon un mode avantageux de l'invention, la portion arrière coudée comprend des éléments faisant saillie longitudinalement vers l'arrière, préférentiellement des goujons, aptes à coopérer par engagement avec la portion transversale arrière du support.

Selon un mode avantageux de l'invention, la plaque de soutien comprend deux pattes latérales de fixation au support, lesdites pattes étant situées de part et d'autre de ladite plaque, sur une moitié avant, préférentiellement sur un tiers avant, plus préférentiellement sur un quart avant de ladite plaque.

Avantageusement, les pattes latérales comprennent des moyens de fixation rapide permettant la fixation provisoire de la plaque après engagement de sa portion arrière avec le support et pivotement de ladite plaque.

L'invention a également pour objet un véhicule automobile selon les revendications 7 et 8. Avantageusement, la dimension du module de coussin gonflable dans le sens longitudinal du véhicule est comprise entre 200mm et 300mm.

Avantageusement, la dimension du module de coussin gonflable dans le sens transversal du véhicule est comprise entre 250mm et 350mm.

Avantageusement, la dimension du module de coussin gonflable en hauteur est comprise entre 40mm et 80mm.

Avantageusement, le module de coussin gonflable comprend une enveloppe extérieure en matériau plastique et/ou en fibre.

Avantageusement, les portions longitudinales du support s'étendent essentiellement longitudinalement, la garniture de toit étant préférentiellement fixée via ses orifices de fixation de pare-soleil auxdites portions.

Selon un mode avantageux de l'invention, le module de coussin gonflable comprend une ou plusieurs surfaces concaves épousant, respectivement, le ou les raidisseur(s) présentant une section de profil arrondi formant une concavité dirigée vers le bas.

Selon un mode avantageux de l'invention, le véhicule automobile comprend au moins un pare-soleil, les fixations dudit ou des pare-soleil étant situées préférentiellement à moins de 20° de la perpendiculaire au creux du raidisseur à profil arrondi, plus préférentiellement à moins de 10° de ladite perpendiculaire.

Les mesures de l'invention sont intéressantes en ce qu'elles permettent au module de coussin gonflable de travailler, en l'occurrence de s'ouvrir, vers l'avant en franchissant la garniture, celle-ci s'ouvrant en avant de la personne protégée sans générer de risques supplémentaires de blessure pour elle. En effet, le dispositif de fixation offre un soutien rigide ce qui ne génère pas de déplacement d'éléments décoratifs ou fonctionnels à proximité lors du déploiement du coussin.

D'autres caractéristiques et avantages de la présente invention seront mieux compris à l'aide de la description et des dessins parmi lesquels :
- La figure 1 est une illustration de la partie avant droite de l'habitacle d'un véhicule automobile en situation de collision avant, le véhicule étant conforme à l'invention, un passager étant en position contre un coussin gonflable en position déployée ;
- La figure 2 est une vue en éclaté du toit de la figure 1 ;
- La figure 3 est une vue de la plaque de soutien du dispositif conforme à l'invention, la plaque couvrant un module de coussin gonflable ;
- La figure 4 est une vue de dessous du toit des figures 1 et 2, le toit étant représenté sans garniture ;
- La figure 5 est une vue en coupe du toit de la figure 1, la coupe étant au niveau d'un dispositif de fixation d'un module de coussin gonflable ;

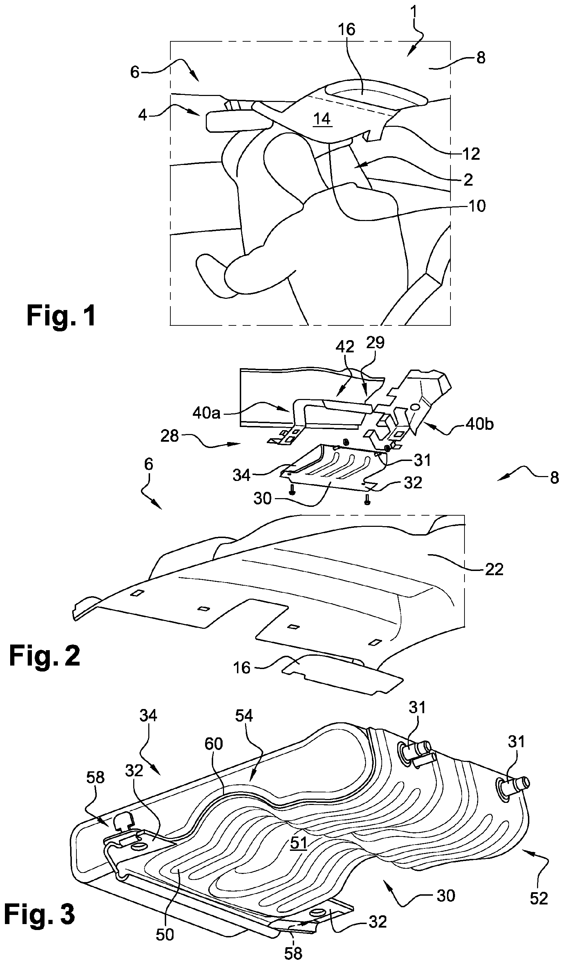

La figure 1 illustre une mise en situation dans un habitacle 1 d'une collision frontale d'un véhicule automobile, un passager avant étant en position contre un coussin gonflable 2 déployé. On y voit un pare-brise 4, un toit 6, une garniture de pavillon de toit 8, le coussin gonflable 2 parti du toit 6 est essentiellement déployé vers l'avant et vers le bas, devant le passager de manière à le protéger. Pour arriver dans cette position, le coussin gonflable 2, libéré par du gaz sous pression, a forcé une ouverture de la garniture de pavillon de toit 8. On peut observer sur l'image le bord avant 10 ainsi que les bords latéraux 12 de la portion de garniture 14 dont l'ouverture a ainsi été forcée. Le toit comprend un pare-soleil 16 disposé en arrière de la portion de garniture 14 et fixé au toit 6 ; le coussin gonflable 2, même après déploiement n'a pas engendré de déplacement du pare-soleil 16. En l'occurrence le véhicule comprend d'autres équipements fonctionnels à proximité de la portion de garniture 14, ces équipements ne se voyant pas non plus endommagés ou déplacés vers le passager lors du déploiement du coussin gonflable 2. La situation illustrée ci-avant pour le passager du véhicule peut aussi être celle du conducteur du véhicule, les éléments présentés plus haut comme se trouvant à l'avant droit de l'habitacle 1 devenant référencés à l'avant gauche de l'habitacle.

La figure 2 est une vue en éclaté du toit 6 du véhicule conforme à l'invention. Le toit 6 comprend un panneau 22 de garniture de pavillon 8. En dessous du panneau 22 est logé le pare-soleil 16. Au-dessus du panneau 22 sont logés : un dispositif de fixation 28 de coussin gonflable comprenant un support 29 et une plaque de soutien 30 montée sur le support 29 ; un module de coussin gonflable 34 maintenu par le dispositif 28. Plus précisément, le support 29 du dispositif de fixation 28 comprend deux portions longitudinales (40a, 40b) et une portion transversale arrière 42, les portions ci-avant formant un logement pour le module de coussin gonflable 34, la plaque de soutien 30 étant apte à le couvrir. La plaque 30 comprend des goujons 31 de fixation arrière à la portion arrière 42 ainsi que des pattes latérales 32 de fixation aux portions longitudinales (40a, 40b) du support 29, respectivement. Les portions longitudinales (40a, 40b) peuvent s'étendre longitudinalement, la garniture de toit 8 pouvant comprendre des orifices de fixation, notamment de pare-soleil, montés à ces portions (40a, 40b).

La figure 3 est une illustration de la plaque de soutien 30 et du module de coussin gonflable 34, la plaque 30 étant disposée en contact avec le module 34, formant un ensemble conforme à l'invention prêt à être monté sur le toit. La plaque de soutien 30 est distincte du support vu plus haut et configurée pour y être fixée, on peut voir les goujons arrière 31 et les pattes latérales 32 pour cette fixation. La plaque de soutien 30 comprend des raidisseurs 50 s'étendant longitudinalement et/ou transversalement. Les raidisseurs 50 peuvent être formés par déformation de la plaque de soutien 30, celle-ci pouvant être en aluminium ou en fer. Les raidisseurs peuvent s'étendre sur plus de 80% de la longueur de la plaque. On peut voir un raidisseur transversal 51 en position centrale de la plaque de soutien 30. Le raidisseur 51 présente une section de profil arrondi formant une concavité dirigée vers le bas lorsque la plaque de soutien 30 est montée au toit, il peut présenter un creux vers l'intérieur de la concavité de 10% à 50% de la hauteur du module de coussin gonflable 34, plus préférentiellement de 20% à 40% de cette hauteur.

La réalisation des raidisseurs (50, 51) dans la plaque 30 est intéressante en vue de la rigidifier, le raidisseur 51 rigidifiant favorablement la partie principale 54 de la plaque 30 et/ou le milieu dans la direction longitudinale de la plaque 30. Le module de coussin gonflable 34 peut être formé dans une enveloppe extérieure en matériau plastique et/ou en fibre, il peut comprendre une ou plusieurs surfaces concaves 60 épousant la plaque 30, notamment le ou les raidisseurs 51 présentant une section de profil arrondi formant une concavité dirigée vers le bas.

La figure 3 permet également de voir les moyens de fixation au toit de la plaque 30. Celle-ci comprend une portion arrière 52 coudée par rapport à la portion principale 54 de ladite plaque 30. La portion arrière 52 en question est destinée à s'engager avec la portion transversale arrière du support 29, l'engagement se faisant par des éléments formés dans la portion 52 et faisant saillie longitudinalement vers l'arrière, les goujons 31 figurants parmi ces éléments. Les raidisseurs 50 peuvent s'étendre au moins partiellement sur la portion coudée 52. On peut voir les pattes latérales 32 de la plaque 30 situées de part et d'autre de la plaque sur un quart avant de la plaque 30. Les pattes 32 peuvent être situées sur un tiers avant de la plaque, elles peuvent aussi être situées sur la moitié avant de la plaque. Les pattes latérales 32 peuvent également comprendre des moyens de fixation rapide 58, ceux-ci permettant la fixation provisoire de la plaque 30 au support du dispositif de fixation après engagement de sa portion arrière 52 dans la portion arrière dudit support.

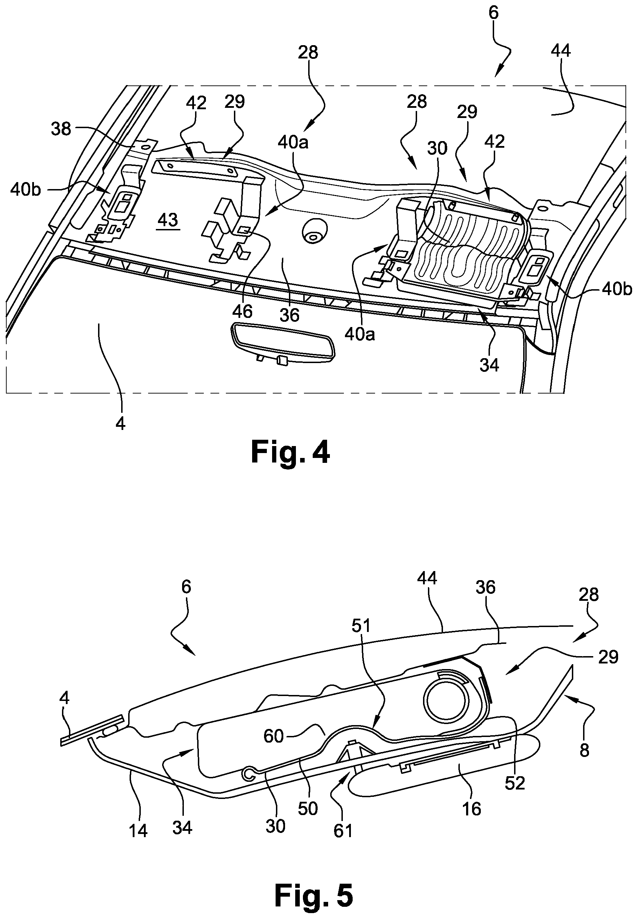

La figure 4 est une vue du toit 6 d'un véhicule automobile conforme à l'invention, il est cependant représenté sans garniture. Le véhicule comprend un pare-brise 4, des dispositifs de fixation 28 du module de coussin gonflable 34 pour le conducteur ainsi que pour le passager avant. On peut voir les portions longitudinales (40a , 40b) ainsi que les portions transversales arrière 42 des supports 29, ces portions formant les logements pour des modules de coussin gonflable 34. On peut observer le logement 43 dans le support 29 (à gauche sur l'image). Les supports 29 sont fixés au toit, ils peuvent notamment être soudés à une traverse de toit 36 elle-même soudée à la couverture de toit 44. Les portions longitudinales 40b du support 29, celles logées vers l'extérieur du véhicule peuvent notamment être soudées à des goussets chacun d'eux étant soudé à un profilé longitudinal du toit. Un tel module 34 est représenté, il est logé dans l'espace formé par le support 29 de droite et couvert par une plaque de soutien 30 du dispositif 28. Plus précisément, la plaque de soutien 30 est disposée sur la face inférieure du module 34. Les dimensions du module de coussin gonflable 34 peuvent être comprises entre 200mm et 300mm dans le sens longitudinal du véhicule, entre 250mm et 350mm dans le sens transversal, et entre 40mm et 80mm en hauteur.

La figure 5 est une vue en coupe du toit 6 du véhicule automobile conforme à l'invention. Un module de coussin gonflable 34 est monté au toit 6 au-dessus de la garniture 8, il est configuré pour se déployer vers l'avant et vers le bas, devant le conducteur ou le passager avant du véhicule. On peut voir la portion 14 de la garniture 8 en avant du module, la portion en question vue en relation à la figure 1 étant destinée à être traversée par le sac gonflable du module 34 lors de son déploiement. On peut voir le module 34 en haut du pare-brise 4, celui-ci étant collé à la couverture de toit 44. La vue présente aussi le dispositif de fixation 28 du module 34, plus précisément on peut voir en coupe, la plaque de soutien 30 ainsi que la portion transversale arrière 52 du support 29 du dispositif. Le support 29 en question est lui-même fixé au toit 6 et le module de coussin gonflable 34 est maintenu le long du toit 6 par la plaque de soutien 30. En l'occurrence, le support 29 est fixé au toit via la traverse avant 36 du toit, celle-ci étant soudée à la couverture 44 du toit sur son bord avant via une feuillure.

La figure 5 illustre également un pare-soleil 16 monté sous la garniture 8 du véhicule conforme à l'invention. La fixation du pare-soleil 16 peut être réalisée sur les portions longitudinales du support 29, elle peut également être réalisée sur la garniture 8. Dans ce dernier cas, les moyens de fixation 61 du pare-soleil 16 sont favorablement situés en vis-à-vis du milieu dans la direction longitudinale de la plaque de soutien 30 du module 34. Cette mesure est intéressante en ce que les moyens 61 en question peuvent se trouver en dessous de la plaque 30 au niveau du raidisseur 51 de forme arrondie et formant une concavité dirigée vers le bas ; une déformation de la plaque 30 vers le bas lors du déclenchement du module 34, n'étant pas susceptible, de par la forme de la concavité, d'interférer avec la fixation 61 et/ou la garniture 8. Les moyens de fixation 61 peuvent être situés à moins de 20° de la perpendiculaire au creux du raidisseur à profil arrondi, plus préférentiellement à moins de 10° de ladite perpendiculaire.

## Revendications

1. Dispositif de fixation (28) d'un module de coussin gonflable (34) à l'avant du toit (6) d'un véhicule automobile, comprenant :
- un support (29) ;
- une plaque de soutien (30) du module (34), distincte du support (29) et configurée pour être fixée audit support (29).
la plaque de soutien (30) comprenant au moins un raidisseur (50 , 51), ledit ou lesdits raidisseur(s) (50 , 51) s'étendant longitudinalement et/ou transversalement et étant préférentiellement formé(s) par déformation de la plaque de soutien (30), **caractérisé en ce que** ledit ou lesdits raidisseur(s) (50, 51) présentent une section de profil arrondi formant une concavité dirigée vers le bas lorsque la plaque de soutien (30) est montée sur le support (29) et le dispositif fixé au toit.

2. Dispositif de fixation (28) selon la revendication 1, **caractérisé en ce que** le raidisseur (51) ou au moins un des raidisseurs (51) à section de profil arrondi s'étend transversalement essentiellement en position centrale de la plaque de soutien (30).

3. Dispositif de fixation (28) selon la revendication 1 ou 2, **caractérisé en ce que** le support (29) comprend deux portions longitudinales (40a, 40b) et une portion transversale arrière (42), formant un logement (43) pour le module de coussin gonflable (34), la plaque de soutien (30) étant apte à couvrir ledit logement (43).

4. Dispositif de fixation (28) selon la revendication 3, **caractérisé en ce que** la plaque de soutien (30) comprend une portion arrière coudée (52) par rapport à la portion principale (54) de ladite plaque, ladite portion arrière (52) étant configurée pour coopérer, préférentiellement par engagement, avec la portion transversale arrière (42) du support (29).

5. Dispositif de fixation (28) selon la revendication 4, **caractérisé en ce que** la portion arrière coudée (52) comprend des éléments faisant saillie longitudinalement vers l'arrière, préférentiellement des goujons (31), aptes à coopérer par engagement avec la portion transversale arrière (42) du support (29).

6. Dispositif de fixation (28) selon l'une des revendications 1 à 5, **caractérisé en ce que** la plaque de soutien (30) comprend deux pattes latérales (32) de fixation au support (29), lesdites pattes étant situées de part et d'autre de ladite plaque (30), sur une moitié avant, préférentiellement sur un tiers avant, plus préférentiellement sur un quart avant de ladite plaque (30).

7. Véhicule automobile comprenant un pare-brise (4), un toit (6), une garniture de toit (8), et un module de coussin gonflable (34) disposé entre la garniture (8) et le toit (6) en haut du pare-brise (4) au moyen d'un dispositif de fixation, le module de coussin gonflable (34) étant configuré pour se déployer essentiellement vers l'avant et vers le bas, devant le conducteur ou le passager avant du véhicule ;
**caractérisé en ce que** le dispositif (28) est conforme à l'une des revendications 1 à 6, le support (29) dudit dispositif (28) étant fixé au toit (6) et le module de coussin gonflable (34) étant maintenu le long du toit (6) par la plaque de soutien (30) disposée sur la face inférieur dudit module (34).

8. Véhicule automobile comprenant un pare-brise (4), un toit (6), une garniture de toit (8), et un module de coussin gonflable (34) disposé entre la garniture (8) et le toit (6) en haut du pare-brise (4) au moyen d'un dispositif de fixation, le module de coussin gonflable (34) étant configuré pour se déployer essentiellement vers l'avant et vers le bas, devant le conducteur ou le passager avant du véhicule ; **caractérisé en ce que** le dispositif (28) est conforme à l'une des revendications 3 à 4, le support (29) dudit dispositif (28) étant fixé au toit (6) et le module de coussin gonflable (34) étant maintenu le long du toit (6) par la plaque de soutien (30) disposée sur la face inférieur dudit module (34), le module de coussin gonflable (34) comprenant une ou plusieurs surfaces concaves (60) épousant, respectivement, le ou les raidisseur(s) (51) présentant une section de profil arrondi formant une concavité dirigée vers le bas.

## Patentansprüche

1. Vorrichtung (28) zum Befestigen eines Airbagmoduls (34) an der Vorderseite des Dachs (6) eines Kraftfahrzeugs, umfassend:
- einen Träger (29);
- eine Trägerplatte (30) des Moduls (34), die von dem Träger (29) getrennt ist und konfiguriert ist, um an dem Träger (29) befestigt zu sein,
wobei die Trägerplatte (30) mindestens einen Versteifer (50, 51) umfasst, wobei sich der oder die Versteifer (50, 51) längs und/oder quer erstrecken und bevorzugt durch Verformen der Trägerplatte (30) geformt ist/sind,
**dadurch gekennzeichnet, dass** der oder die Versteifer (50, 51) einen Profilquerschnitt aufweist/aufweisen, der eine Konkavität bildet, die nach unten gerichtet ist, wenn die Trägerplatte (30) auf dem Träger (29) montiert und die Vorrichtung an dem Dach befestigt ist.

2. Befestigungsvorrichtung (28) nach Anspruch 1, **dadurch gekennzeichnet, dass** sich der Versteifer (51) oder mindestens einer der Versteifer (51) mit gerundetem Profilquerschnitt im Wesentlichen in zentraler Position der Trägerplatte (30) erstreckt.

3. Befestigungsvorrichtung (28) nach Anspruch 1 oder 2, **dadurch gekennzeichnet, dass** der Träger (29) zwei Längsabschnitte (40a, 40b) und einen hinteren Querabschnitt (42) umfasst, die eine Aufnahme (43) für das Airbagmodul (34) bilden, wobei die Trägerplatte (30) geeignet ist, um die Aufnahme (43) abzudecken.

4. Befestigungsvorrichtung (28) nach Anspruch 3, **dadurch gekennzeichnet, dass** die Trägerplatte (30) einen hinteren Abschnitt (52), der in Bezug auf den Hauptabschnitt (54) der Platte abgewinkelt ist, umfasst, wobei der hintere Abschnitt (52) konfiguriert ist, um bevorzugt durch Eingreifen mit dem hinteren Querabschnitt (42) des Trägers (29) zusammenzuwirken.

5. Befestigungsvorrichtung (28) nach Anspruch 4, **dadurch gekennzeichnet, dass** der hintere abgewinkelte Abschnitt (52) Elemente umfasst, die längs nach hinten vorstehen, bevorzugt Stifte (31), die geeignet sind, um durch Eingreifen mit dem hinteren Querabschnitt (42) des Trägers (29) zusammenzuwirken.

6. Befestigungsvorrichtung (28) nach einem der Ansprüche 1 bis 5, **dadurch gekennzeichnet, dass** die Trägerplatte (30) zwei seitliche Pratzen (32) zum Befestigen an dem Träger (29) umfasst, wobei die Pratzen zu beiden Seiten der Platte (30), auf einer vorderen Hälfte, bevorzugt auf einem vorderen Drittel, bevorzugter auf einem vorderen Viertel der Platte (30) liegen.

7. Kraftfahrzeug, das eine Windschutzscheibe (4), ein Dach (6), eine Dachauskleidung (8) und ein Airbagmodul (34), das zwischen der Auskleidung (8) und dem Dach (6) oberhalb der Windschutzscheibe (4) mittels Befestigungsvorrichtungen angeordnet ist, umfasst, wobei das Airbagmodul (34) konfiguriert ist, um sich im Wesentlichen nach vorn und nach unten vor dem Fahrer oder dem vorderen Insassen des Fahrzeugs aufzublasen;
**dadurch gekennzeichnet, dass** die Vorrichtung (28) einem der Ansprüche 1 bis 6 entspricht, wobei der Träger (29) der Vorrichtung (28) an dem Dach (6) befestigt ist, und das Airbagmodul (34) entlang des Dachs (6) von der Trägerplatte (30), die auf der unteren Fläche des Moduls (34) angeordnet ist, gehalten wird.

8. Kraftfahrzeug, das eine Windschutzscheibe (4), ein Dach (6) eine Dachauskleidung (8) und ein Airbagmodul (34), das zwischen der Auskleidung (8) und dem Dach (6) oberhalb der Windschutzscheibe (4) mittels einer Befestigungsvorrichtung angeordnet ist, umfasst, wobei das Airbagmodul (34) konfiguriert ist, um sich im Wesentlichen nach vorn und nach unten vor dem Fahrer oder dem vorderen Insassen des Fahrzeugs aufzublasen, **dadurch gekennzeichnet, dass** die Vorrichtung (28) einem der Ansprüche 3 bis 4 entspricht, wobei der Träger (29) der Vorrichtung (28) an dem Dach (6) befestigt ist, und das Airbagmodul (34) entlang des Dachs (6) von der Trägerplatte (30), die auf der unteren Fläche des Moduls (34) angeordnet ist, gehalten wird, wobei das Airbagmodul (34) eine oder mehrere konkave Oberflächen (60) umfasst, die sich jeweils an den oder die Versteifer (51) legen, der/die einen gerundeten Profilquerschnitt, der eine nach unten gerichtete Konkavität bildet, aufweist.

## Claims

1. A device (28) for attaching an airbag module (34) to the front of the roof (6) of a motor vehicle, including:
- a support (29);
- a plate (30) for supporting the module (34), which is distinct from the support (29) and configured to be attached to said support (29),
the supporting plate (30) including at least one stiffener (50, 51), said stiffener(s) (50, 51) extending longitudinally and/or transversely and being preferably formed by deformation of the supporting plate (30),
**characterized in that** said stiffener(s) (50, 51) have a rounded profile section forming a concavity oriented downwards when the supporting plate (30) is mounted on the support (29) and the device is attached to the roof.

2. The attaching device (28) according to Claim 1, **characterized in that** the stiffener (51) or at least one of the stiffeners (51) with rounded profile section extends transversely essentially in central position of the supporting plate (30).

3. The attaching device (28) according to Claim 1 or 2, **characterized in that** the support (29) includes two longitudinal portions (40a, 40b) and one rear transverse portion (42), forming a housing (43) for the airbag module (34), the supporting plate (30) being ale to cover said housing (43).

4. The attaching device (28) according to Claim 3, **characterized in that** the supporting plate (30) includes a bent rear portion (52) with respect to the main portion (54) of said plate, said rear portion (52) being configured to cooperate, preferably by engagement, with the rear transverse portion (42) of the support (29).

5. The attaching device (28) according to Claim 4, **characterized in that** the bent rear portion (52) includes elements projecting longitudinally towards the rear, preferably pins (31) able to cooperate by engagement with the rear transverse portion (42) of the support (29).

6. The attaching device (28) according to one of Claims 1 to 5, **characterized in that** the supporting plate (30) includes two lateral lugs (32) for attaching to the support (29), said lugs being situated on either side of said plate (30), over a front half, preferably over a front third, more preferably over a front quarter of said plate (30).

7. A motor vehicle including a windscreen (4), a roof (6), a headliner (8), and an airbag module (34) disposed between the headliner (8) and the roof (6) at the top of the windscreen (4) by means of an attaching device, the airbag module (34) being configured to deploy essentially towards the front and downwards, in front of the driver or the front passenger of the vehicle;
**characterized in that** the device (28) is in accordance with one of Claims 1 to 6, the support (29) of said device (28) being attached to the roof (6) and the airbag module (34) being held along the roof (6) by the supporting plate (30) disposed on the lower face of said module (34).

8. A motor vehicle including a windscreen (4), a roof (6), a headliner (8), and an airbag module (34) disposed between the headliner (8) and the roof (6) at the top of the windscreen (4) by means of an attaching device, the airbag (34) being configured to deploy essentially towards the front and downwards, in front of the driver or the front passenger of the vehicle; **characterized in that** the device (28) is in accordance with one of Claims 3 to 4, the support (29) of said device (28) being attached to the roof (6) and the airbag module (34) being held along the roof (6) by the supporting plate (30) disposed on the lower face of said module (34), the airbag module (34) including one or several concave surfaces (60) fitting, respectively, the stiffener(s) (51) having a rounded profile section forming a downwardly oriented concavity.
